## Europäisches Patentamt

## European Patent Office

## Office européen des brevets

(11) Publication number: **0 108 583**
**B1**

## EUROPEAN PATENT SPECIFICATION

(45) Date of publication of patent specification: **07.01.87**

(51) Int. Cl.⁴: **F 16 F 15/08**

(21) Application number: **83306610.3**

(22) Date of filing: **31.10.83**

(54) Improvements in or relating to vibration-absorbing supports.

(30) Priority: **30.10.82 GB 8231105**

(43) Date of publication of application:
**16.05.84 Bulletin 84/20**

(45) Publication of the grant of the patent:
**07.01.87 Bulletin 87/02**

(84) Designated Contracting States:
**BE CH DE FR IT LI NL SE**

(56) References cited:
**DE-U-8 002 600**
**GB-A- 792 511**
**US-A-2 660 387**

(73) Proprietor: **DUNLOP LIMITED**
**Dunlop House Ryder Street St. James's**
**London SW1Y 6PX (GB)**

(72) Inventor: **Lob, Friedrich**
**Frankenthaler Strasse 13**
**D-7600 Karlsruhe 21 (DE)**

(74) Representative: **Moore, John Hamilton et al**
**Dunlop Limited Group Patent Department P.O.**
**Box 504**
**Erdington Birmingham B24 9QH (GB)**

## Description

This invention relates to vibration absorbing supports, for example for engines, generators and the like apparatus, wherein the apparatus to be supported is mounted on a support member through an elastomeric spring member to which the apparatus is directly secured.

It is known to provide vibration absorbing supports to which the present invention relates with a buffer device to limit the relative movement that occurs between the load carrying member and the support member in use.

One type of buffer device is described in U.K. Patent 792511 and comprises a spindle mounted on one of the members and carrying a stop engageable with a pair of limit stops associated with the other member. The buffer device is provided with a screw thread connection to enable the position of the stop to be adjusted in the installed position of the support. A disadvantage of this arrangement is that pre-loading the support prior to installation requires the application of an external load to the support and the pre-load must be limited to a value close to the actual static load, otherwise it would not be possible to adjust the spindle stop after installation due to the spindle stop engaging one of the limit stops.

Another type of buffer device is described in DE—U—8002600 and comprises a load carrying member and support member having interposed therebetween a frusto-conical elastomeric element which is compressed when the device supports a load. Subsequent to installation of the device a central spindle is employed to maintain normally compressed a rubber cushion pad which acts as a resilient buffer to limit relative movement between the members. The provision of the resilient cushion pad and need to avoid damage thereto means that in practice the spindle cannot be used to pre-load the frusto-conical elastomeric element. Thus, as in the case of constructions shown in U.K. 792511, it is necessary to apply an external load in order to effect pre-loading.

The present invention seeks to overcome the disadvantages of the above-described vibration absorbing supports.

According to the present invention in a vibration absorbing support comprising spring means acting between a support member and a load carrying member, and a buffer device comprising a spindle carrying a buffer stop for controlling relative movement between said support member and load carrying member, the buffer device is provided with means movable between a first position in which the spindle is releasably connected to one of the support members and load carrying members whereby relative movement therebetween is controlled by the stop and a second position in which the spindle is released from said one of the support member and load carrying member to allow movement of the spindle to urge the members towards one another and thereby pre-load the spring means.

The means may comprise an externally threaded portion on the spindle which in the first position is engaged in an internally threaded opening in said one of the support member and load carrying member and in the second position is disengaged from the opening allowing the spindle to move freely through the opening.

Alternatively, the means may comprise a locating nut having an internal thread by which the nut is mounted on the threaded portion of the spindle for axial movement thereon. In said first position the nut is operatively connected to said one of the support member and load carrying member and in said second position is axially spaced from said one of the support member and load carrying member. Preferably the locating nut is mounted on a guide pin connected to said one of the support member and load carrying member. Preferably the guide pin carries a centering sleeve for the spindle.

Conveniently the pre-load is applied by tightening a fastening nut mounted on the end of the spindle opposite to the stop such that the support member and load carrying member are clamped between the stop and fastening nut. Rotation of the fastening nut relative to the spindle during pre-loading may be facilitated by means of a low-friction washer, and any tendency for the spindle to rotate with the fastening nut may be overcome by means, for example, of a key device temporarily fitted to an end of the spindle.

The spring means may be formed from elastomeric material e.g. rubber, optionally containing a reinforcement, e.g. one or more layers of inextensible material such as metal plates and may comprise a single annular spring or a plurality of springs which may be circumferentially spaced relative to one another around the spindle.

Preferably the support member and load carrying member are each of inverted, generally cup-shaped profile and the spring means acts between confronting surfaces thereof which are inclined relative to the vertical and horizontal so that the spring means is loaded in compression and shear.

Preferably the spindle extends through a respective central opening in each of the support member and the load carrying member and the buffer stop is engageable with a first end stop associated with one of the support member and load carrying member to limit relative movement therebetween in one direction and a second end stop axially spaced from the first end stop to limit relative movement therebetween in the opposite direction. The abutment surfaces on the buffer stop and/or the end stops may be provided with elastomeric material to provide a resilient buffering action.

The invention will now be described in more detail, by way of example only, with reference to the accompanying diagrammatic drawings wherein:—

Figure 1 shows in vertical section part of one embodiment of a vibration absorbing support according to the present invention, and

Figure 2 shows in vertical section a second embodiment of a vibration absorbing support according to the present invention.

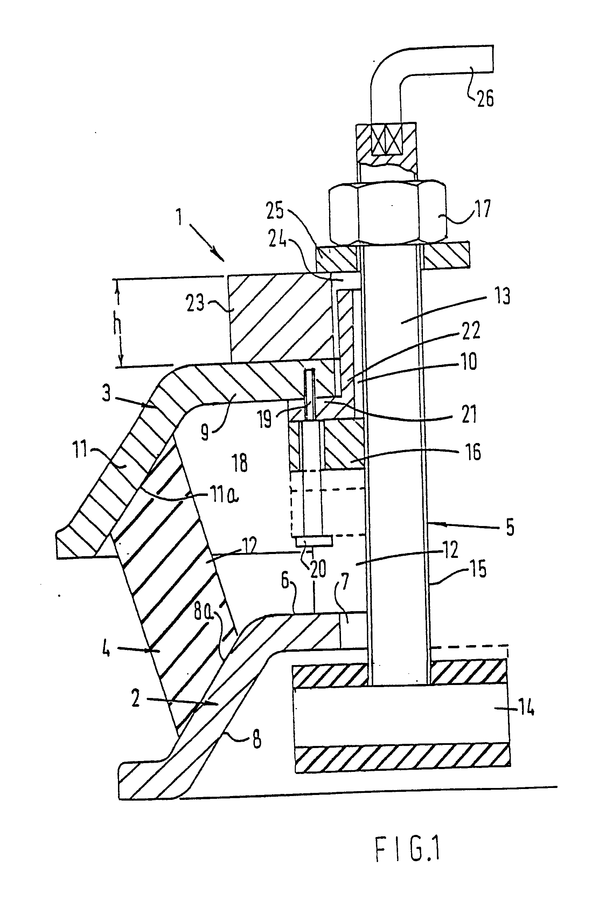

The vibration absorbing support 1 shown in Figure 1 of the accompanying drawings comprises a support member 2, a load carrying member 3, spring means 4 acting between the members 2 and 3 and a combined buffer and pre-load device 5.

The support member 2 is of an inverted cup-shape comprising a flat top 6 having a central opening 7 therein, and an annular, downwardly and outwardly extending skirt 8 terminating in an outwardly directed flange formed with one or more apertures (not shown) for the passage of bolts or similar fastening means for securing the support member 2 to a rigid base (not shown). The load carrying member 3 is also of inverted cup shape, generally similar to the support member 2, and comprises a flat top 9 having a central opening 10 therein and a downwardly and outwardly extending annular skirt 11.

Member 3 is positioned above member 2 and is axially spaced therefrom by the spring means 4 acting between confronting surfaces 11a and 8a of the skirts 11 and 8 respectively. Spring means 4 comprises four rubber springs 12 uniformly distributed circumferentially relative to the longitudinal axis of the annular skirts 8, 11 and bonded or fastened to the surfaces 11a and 8a. The springs 12 may be reinforced by one or more layers of substantially inextensible material, e.g. metal.

The buffer and pre-load device 5 includes a spindle 13 having attached to one end a buffer stop 14 having elastomeric material bonded to the upper and lower surfaces thereof. Stop 14 is located within the support member 2 and spindle 13 extends vertically upwards through the openings 7 and 10 in the support member 2 and load carrying member 3 respectively. A locating nut 16 and a fastening nut 17 are mounted on an externally threaded portion 15 of spindle 13. Locating nut 16 has a through bore 18 through which a guide pin 19 attached to the under surface of the load carrying member 3 extends. Locating nut 16 is slidable along pin 19 between a lower position shown by dotted lines in Figure 1 in which it engages an enlarged head 20 of the pin and an upper position shown in full lines in Figure 1, in which it engages flange 21 of a centering sleeve 22 for the spindle 13. Flange 21 is mounted on the pin 19, on a reduced diameter portion thereof, to maintain the flange against the flat top 9 and a sleeve 22 projects through the opening 10 in the load carrying member.

Support 1 may be pre-loaded prior to installation as follows; the spindle 13 is rotated by means of the associated buffer stop 14 which is held and rotated close to but not in contact with the underside of the portion 6 of member 2 to lower the locating nut 16 to its bottom position at which it bears against the pin head 20, fastening nut 17 is removed from the spindle and a collar 23 having a central opening 24 to receive the centering sleeve 22 and a height h corresponding to the height of the member (not shown) to which the support 1 is secured in subsequent use is slid onto the spindle 13 to engage the load support member followed by a low friction washer 25.

Fastening nut 17 is then remounted on the spindle 13 and rotated to raise the spindle 13 until stop 14 engages the under surface of portion 6 of support member 2, whereupon further rotation of the nut 17, facilitated by the low friction washer 25 moves support member 2 and load carrying member 3 towards one another to compress and thereby pre-load the spring 12 to any required level. During this operation any tendency for the spindle to rotate relative to the locking nut 16 is restrained first by means of a spindle key 26 and then by the elastomeric material of stop 14 frictionally engaging the underside of portion 6 of the support member 2.

When subsequently the support 1 is to be installed the nut 17, washer 25 and collar 23 are removed thereby releasing the pre-load and with buffer stop 14 held spaced from the support 2 as shown in Figure 1, spindle 13 is rotated to raise the locating nut 16 from its bottom position to its top position. The equipment to be supported is then attached e.g. by sliding an apertured attachment flange (not shown) having a thickness corresponding to that of collar 23 followed by a high friction washer onto the spindle. Fastening nut 17 is then remounted on the spindle and tightened until the attachment flange is clamped between fastening nut 17 and locating nut 16. In the installed static load condition the stop 14 is free from contact with the under surface of the support member 2 and the position of the stop 14 between end stops defined by the under surface of the support member and a rigid base (not shown) on which the support is mounted may be adjusted by rotating the spindle to provide the required load deflection capability.

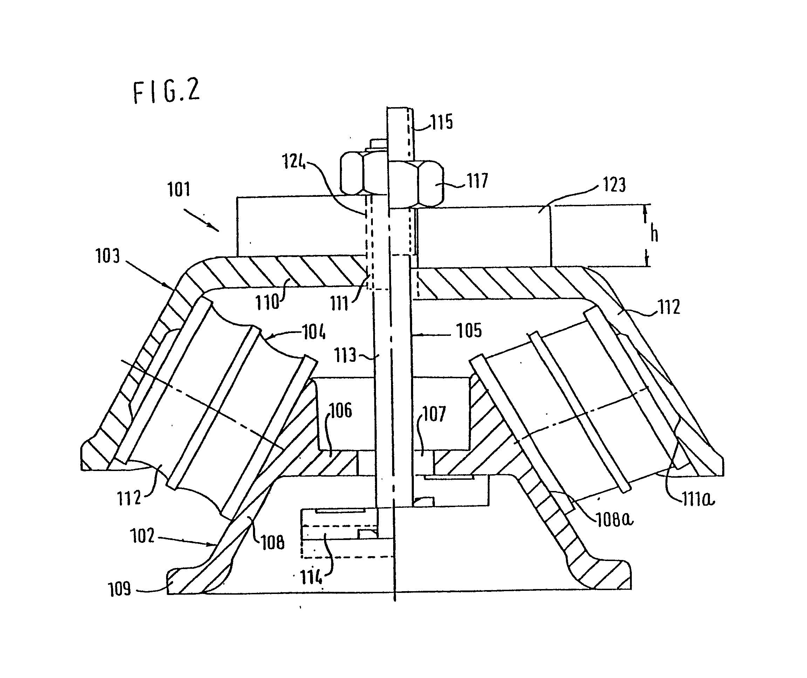

Referring now to Figure 2 there is shown a second embodiment of vibration absorbing support 101 according to the present invention. Support 101 comprises a support member 102, load carrying member 103, spring means 104 acting between the members 102 and 103 and a combined buffer and pre-load device 105.

Support member 102 is of generally inverted cup-shape comprising a recessed top 106 having a central aperture 107 and an annular skirt 108 extending downwardly and outwardly and terminating in an outwardly directed flange 109. Flange 109 is formed with one or more apertures (not shown) for the passage of bolts or similar fastening means for securing the support member 102 to a rigid base (not shown). The load carrying member 103 is also of inverted cup-shape comprising a flat top 110 having a central aperture 111 and an annular skirt 112 extending downwardly and outwardly. Member 103 is positioned above member 102 and is axially spaced therefrom by the spring means 104 acting between confronting surfaces 111a and 108a of the skirts 111 and 108 respectively. Spring means 104 comprises a plurality of rubber springs 112 each comprising inter-leaving layers of rubber and rigid reinforcement material, e.g. metal. The end surfaces of the springs are secured to the adjacent surfaces 111a or 108a e.g. by bonding or mechanical locking. Alternatively each spring may comprise elastomeric material only.

The buffer and pre-load device 105 includes a spindle 113 having attached to one end a buffer stop 114 which is located within the support member 102. Spindle 113 extends vertically upwards through the apertures 107 and 111 in the support member 102 and load carrying member 103 respectively and terminates in an externally threaded portion 115 on which a fastening nut 117 is mounted. The aperture 111 in the load carrying member 103 is internally threaded and the spindle 113 is movable between a first position shown at the right hand side of Figure 2 in which the threaded portion 115 of spindle 113 is above the threaded opening 111 and the spindle 113 is free to move in the opening 111 and a second position shown at the left hand side of Figure 2 in which the threaded portion 115 of spindle 113 is engaged in the opening 111.

Support 101 may be pre-loaded prior to installation as follows. Spindle 113 is rotated to disengage the threaded portion 115 from the opening 111 and fastening nut 117 removed. A collar 123 having a central opening 124 and a height h corresponding to the height of the member (not shown) to which the support 101 is secured in use is slid onto the spindle 113. Fastening nut 117 is then remounted on the spindle 113 with or without the interposition of a low friction washer and rotated to raise the spindle 113 until stop 114 engages the under surface of support member 2 whereupon further rotation of the nut 117 moves support member 112 and load carrying member 113 towards one another to compress and thereby pre-load the springs 112 to any required level.

When the pre-loaded support 101 is to be installed nut 117 and collar 123 are removed, thereby releasing the pre-load and spindle 113 is lowered by rotation so that the threaded portion 115 engages the opening 111 as shown at the left hand side of Figure 2. The equipment to be supported is attached e.g. by locating an apertured attachment flange (not shown) having a height corresponding to that of collar 123 and fastening nut 117 is remounted on the spindle with or without the interposition of a high friction washer and tightened until the attachment flange is clamped between nut 117 and the top of the load carrying member. In the installed static load condition the stop 114 is free from contact with under surface of the support member 102 and the position of the stop between the end stops may be adjusted by rotating spindle 113 (for example by means of a key as described in respect of the first embodiment of the invention) to provide the required load deflection capability.

It will be understood from the foregoing description of two embodiments of vibration absorbing supports according to the present invention that the provision of a releasable connection between the spindle and the load carrying member enables the support to be pre-loaded to any required level prior to installation without applying an external load to the support. Furthermore it will be appreciated that a pre-load may also be applied in the installed position by the same method described above with regard to pre-loading prior to installation. As a result it is possible to pre-set the support to the laden condition in service thereby offsetting the effects of primary creep prior to alignment of the supported apparatus relative to any associated connections and still allow adjustment of the position of the spindle stop between the end stops.

Finally it will be appreciated that although the selectively releasable connection is provided between the spindle and the load carrying member in each of the above-described embodiments such connection could be provided between the spindle and the support member.

## Claims

1. A vibration absorbing support comprising spring means acting between a support member and a load carrying member, and a buffer device comprising a spindle carrying a buffer stop for controlling relative movement between said support member and load carrying member characterised in that said buffer device (5, 105) comprises means (16, 115) movable between a first position in which the spindle (13, 113) is releasably connected to one of the support member (2, 102) and load carrying member (3, 103) whereby relative movement therebetween is controlled by the stop (14, 114) and a second position in which the spindle is released from said one of the support member and load carrying member to allow movement of the spindle to urge the members towards one another and thereby pre-load the spring means (4, 104).

2. A support according to claim 1 characterised in that the means (115) comprises an externally threaded portion on the spindle (113) which in the first position is engaged in an internally threaded opening (111) in said one of the support member (102) and load carrying member (103) and in the second position is disengaged from the opening.

3. A support according to claim 1 characterised in that the means (16) comprises a locating nut (16) mounted on the spindle (13) for axial movement thereon which in the first position is operatively connected to said one of the support member (2) and load carrying member (3) and in the second position is axially spaced from said one of the support member and load carrying member.

4. A support according to claim 3 characterised in that the locating nut (16) is mounted on a guide pin (19) connected to said one of the support member (2) and load carrying member (3).

5. A support according to claim 4 characterised in that the guide pin (19) carries a centering sleeve (22) for the spindle.

6. A support according to any one of the preceding claims characterised in that the preload is applied by tightening a fastening nut (17, 117) mounted on the end of the spindle (13, 113) opposite to the stop (14, 114) such that the support member and load carrying member are clamped between the stop and fastening nut.

7. A support according to claim 6 characterised in that rotation of the fastening nut (17, 117) during pre-loading may be facilitated by means of a low-friction washer (25).

8. A support according to any one of the preceding claims wherein the spring means is formed from elastomeric material, e.g. rubber, optionally containing a reinforcement, e.g. one or more layers of inextensible material.

9. A support according to any one of the preceding claims characterised in that the spindle (13, 113) extends through a respective central opening (7, 101, 107, 111) in each of the support member (2, 102) and the load carrying member (3, 103) and the stop (14, 114) is located between a pair of end stops to limit relative movement between the support member and load carrying member.

10. A support according to claim 9 characterised in that elastomeric material is provided on one or both contacting surfaces of the buffer stop (14, 114) and the end stops (6, 106).

**Patentansprüche**

1. Schwingungen absorbierende Halterung mit einer Federeinrichtung, die zwischen einem Halteelement und einem lasttragenden Element wirkt, und mit einer Puffereinrichtung, die einen Zapfen umfaßt, der einen Pufferanschlag zum Steuern der relativen Bewegung zwischen dem Halteelement und dem lasttragenden Element trägt, dadurch gekennzeichnet, daß die Puffereinrichtung (5, 105) eine Einrichtung (16, 115) umfaßt, die zwischen einer ersten Lage, in der der Zapfen (13, 113) lösbar mit dem Halteelement (2, 102) oder dem lasttragenden Element (3, 103) verbunden ist, so daß die relative Bewegung dazwischen durch den Anschlag (14, 114) gesteuert wird, und einer zweiten Lage bewegbar ist, in der der Zapfen von dem Halteelement oder dem lasttragenden Element gelöst ist, um eine Bewegung des Zapfens zu ermöglichen, so daß die Elemente auf einander zu gedrückt werden und dadurch die Federeinrichtung (4, 104) vorgespannt wird.

2. Halterung nach Anspruch 1, dadurch gekennzeichnet, daß die Einrichtung (115) einen Teil mit Außengewinde am Zapfen (113) umfaßt, der in der ersten Lage in Eingriff mit einer Öffnung (111) mit Innengewinde im Halteelement (102) oder im lasttragenden Element (103) steht und in der zweiten Lage von der Öffnung gelöst ist.

3. Halterung nach Anspruch 1, dadurch gekennzeichnet, daß die Einrichtung (16) eine Festlegungsmutter (16) umfaßt, die auf dem Zapfen (13) zur Ausführung einer axialen Bewegung darauf angebracht ist, und die in der ersten Lage in Arbeitsverbindung mit dem Halteelement (2) oder dem lasttragenden Element (3) steht und in der zweiten Lage axial in Abstand von dem Halteelement oder dem lasttragenden Element angeordnet ist.

4. Halterung nach Anspruch 3, dadurch gekennzeichnet, daß die Festlegungsmutter (16) auf einem Führungsstift (19) angebracht ist, der mit dem Halteelement (2) oder dem lasttragenden Element (3) verbunden ist.

5. Halterung nach Anspruch 4, dadurch gekennzeichnet, daß der Führungsstift (19) eine Zentrierungsbuchse (22) für den Zapfen trägt.

6. Halterung nach einem der vorhergehenden Ansprüche, dadurch gekennzeichnet, daß die Vorspannung dadurch angelegt wird, daß eine Befestigungsmutter (17, 117) festgezogen wird, die auf dem Ende des Zapfens (13, 113) dem Anschlag (14, 114) gegenüber angebracht ist, so daß das Halteelement und das lasttragende Element zwischen dem Anschlag und der Befestigungsmutter eingeklemmt werden.

7. Halterung nach Anspruch 6, dadurch gekennzeichnet, daß die Drehung der Befestigungsmutter (17, 117) beim Anlegen der Vorspannung mittels einer Zwischenscheibe (25) mit niedriger Reibung erleichtert werden kann.

8. Halterung nach einem der vorhergehenden Ansprüche, bei der die Federeinrichtung aus einem elastomeren Material, beispielsweise aus Gummi, gebildet ist, das wahlweise eine Verstärkung, beispielsweise eine oder mehrere Schichten aus einem nicht dehnbaren Material enthält.

9. Halterung nach einem der vorhergehenden Ansprüche, dadurch gekennzeichnet, daß der Zapfen (13, 113) durch eine jeweilige zentrale Öffnung (7, 101, 107, 111) sowohl im Halteelement (2, 102) als auch im lasttragenden Element (3, 103) verläuft und der Anschlag (14, 114) zwischen einem Paar von Endanschlägen zum Begrenzen der relativen Bewegung zwischen dem Halteelement und dem lasttragenden Element angeordnet ist.

10. Halterung nach Anspruch 9, dadurch gekennzeichnet, daß elastomers Material auf einer Kontaktfläche oder beiden Kontaktflächen des Pufferanschlages (14, 114) und der Endanschläge (6, 106) vorgesehen ist.

**Revendications**

1. Un support d'absorption de vibration comprenant un moyen élastique agissant entre un élément d'appui et un élément porteur de charge, et un dispositif d'amortissement comprenant une broche portant une butée d'amortissement pour contrôler un mouvement relatif entre ledit élément 'appui et ledit élément porteur de charge, caractérisé en ce que ledit dispositif d'amortissement (5, 105) comprend un moyen (16, 115) déplaçable entre une première position dans laquelle la broche (13, 113) est reliée de façon séparable à un des éléments d'appui (2, 102) et porteur de charge (3, 103) de façon qu'un mouvement relatif entre eux soit contrôlé par la butée (14, 114), et une seconde position dans laquelle la broche est séparé d'un desdits éléments d'appui et porteur de charge pour permettre un mouvement de la broche en vue de pousser les éléments l'un vers l'autre et de précharger ainsi le moyen élastique (4, 104).

2. Un support conforme à la revendication 1, caractérisé en ce que le moyen (115) comprend une partie filetée extérieurement sur la broche (113), qui est engagée dans la première position dans un trou fileté intérieurement (111) ménagé dans un des éléments d'appui (102) et porteur de charge (103) et qui est dégagée du trou dans la second position.

3. Un support selon la revendication 1, caractérisé en ce que le moyen (16) comprend un écrou de positionnement (16) monté sur la broche (13) pour se déplacer axialement sur celle-ci, et qui, dans la première position, est relié fonctionnellement à une desdits éléments d'appui (2) et porteur de charge (3) alors que dans la seconde position il est espacé axialement de l'élément précité.

4. Un support selon la revendication 3, caractérisé en ce que l'écrou de positionnement est monté sur une tige de guidage (19) reliée à une desdits éléments d'appui (2) et porteur de charge (3).

5. Un support selon la revendication 4, caractérisé en ce que la tige de guidage (19) porte un manchon (22) de centrage pour la broche.

6. Un support selon une quelconque des revendications précédentes, caractérisé en ce que la précharge est appliquée par serrage d'un écrou de fixation (17, 117) monté sur l'extrémité de la broche (13, 113) qui est opposée à la butée (14, 114) de telle sorte que l'élément d'appui et l'élément porteur de charge soient bloqués entre la butée et l'écrou de fixation.

7. Un support selon la revendication 6, caractérisé en ce qu'une rotation de l'écrou de fixation (17, 117) pendant une opération de précharge peut être facilitée au moyen d'une rondelle à faible frottement (25).

8. Un support selon une quelconque des revendications précédentes, dans lequel le moyen élastique est formé d'un matériau élastomère, par exemple de caoutchouc, contenant éventuellement un renforcement, par exemple une ou plusieurs couches d'un matériau inextensible.

9. Un support selon une quelconque des revendications précédentes, caractérisé en ce que la broche (13, 113) s'étend au travers d'une ouverture centrale respective (7, 101, 107, 111) ménagée dans chacun des éléments d'appui (2, 102) et porteur de charge (3, 103) et la butée (14, 114) est placée entre deux butées extrêmes pour limiter un mouvement relatif entre l'élément d'appui et l'élément porteur de charge.

10. Un support selon la revendication 9, caractérisé en ce que le matériau élastomère est placé sur l'une ou les deux surfaces de contact de la butée d'amortissement (14, 114) et des butées extrêmes (6, 106).

FIG.1

FIG.2

0 108 583